Europäisches Patentamt

European Patent Office

Office européen des brevets

(11) Publication number: **0 143 589**
**B1**

(12) **EUROPEAN PATENT SPECIFICATION**

(45) Date of publication of patent specification: **18.01.89**  (51) Int. Cl.⁴: **B 60 J 7/04**

(21) Application number: **84308005.2**

(22) Date of filing: **19.11.84**

(54) Opening roof for a motor vehicle.

(30) Priority: **25.11.83 GB 8331600**
**16.06.84 GB 8415426**

(43) Date of publication of application:
**05.06.85 Bulletin 85/23**

(45) Publication of the grant of the patent:
**18.01.89 Bulletin 89/03**

(84) Designated Contracting States:
**DE FR GB IT**

(56) References cited:
**DE-A-3 416 176**
**GB-A-2 114 212**
**GB-A-2 128 249**

(73) Proprietor: **Britax Weathershields Limited**
**180 Sherlock Street**
**Birmingham B5 7EH (GB)**

(72) Inventor: **Cunningham, Douglas James**
**"Sambourne" 4 Church Close Dunton Bassett**
**Lutterworth Leicestershire LE16 5JY (GB)**
Inventor: **Fisher, Sidney Edward**
**645 Fox Hollies Road Hall Green**
**Birmingham West Midlands B28 9DW (GB)**

(74) Representative: **Hollinghurst, Antony**
**Britax Limited Patent Department**
**Chichester West Sussex PO19 2AQ (GB)**

Courier Press, Leamington Spa, England.

## Description

This invention relates to an opening roof assembly for a motor vehicle of the type comprising a rigid panel closing an opening in the vehicle roof and having front support means and rear support means permitting the panel either to pivot upwardly about a transverse horizontal axis adjacent to its front edge so that the rear edge of the panel is above the vehicle roof or to slide rearwardly below the vehicle roof, the front support means comprising a guide shoe pivotally connected to the panel and slidably mounted in a track extending parallel to a side edge of the opening. An opening roof of this kind is disclosed in GB-A-2128249.

According to the invention, in an opening roof assembly of this type, the front support means further comprises a latch member pivotally mounted on the front shoe and having a latching formation which engages with a complementary formation on the track to prevent movement of the front shoe along the track and resilient means for biasing the latching formation into engagement with the complementary formation, release means fast with the panel being arranged to move the latching formation out of engagement with the complementary formation as the rear edge of the panel is lowered below the vehicle roof.

The rear support means may comprise a guide shoe arranged to be driven along the track and a lever pivotally connected at its front end to the panel, the lever having a pivot formation at its rear end which pivotally engages in a slot in a side wall of the corresponding guide shoe and a stop formation which engages with a complementary formation on the shoe to limit downward angular movement of the front end of the lever about its rear end so that the panel is supported level with the vehicle roof when the pivot formation is at the rear end of the slot.

Preferably the slot in the rear shoe has a rear end section which is parallel to the track so that the panel is level with the vehicle roof when the pivot formation is at any position in this rear end section but is free to be lifted above the vehicle roof only when the formation is at the rear end of the slot.

The lever may be provided with cam follower means arranged to engage with camming means on the rear shoe so as to hold the stop formation in engagement with the complementary formation except when the pivot formation is at the rear end of the slot. Thus the panel is prevented from rising above the level of the vehicle roof when the pivot formation is away from the rear end of the slot. On the other hand, continued forward movement of the rear shoe after the pivot formation has reached the rear end of the slot causes the lever to continue to pivot about its pivot formation, raising the rear edge of the panel. Additional camming means is preferably arranged to co-operate with additional cam follower means so as to prevent forward movement of the pivot formation along the slot when the panel is so raised.

In a preferred form of invention, the additional cam follower means comprises a first cam follower located at the same distance from the pivot means as the stop formation and a second cam follower between the pivot means and the first cam follower. The additional camming means comprises a first cam surface arranged to be engaged by the first cam follower when the extent to which the rear edge of the panel has been raised is less than a predetermined value, and a second cam surface arranged to engage with the second cam follower when this limit is exceeded.

The stop formation for limiting angular movement of the front end of the lever may comprise a projection on one side of the lever, in which case the complementary formation on the shoe may comprise a slot in a side wall thereof. Alternatively, the stop formation may comprise a slot in the lever in which case the complementary formation comprises a pin secured to the shoe. At least that part of the slot or groove in which the pin is located when the rigid panel is level with the vehicle roof is parallel to the part of the slot in the guide shoe which is then occupied by the pivot formation at the rear end of the lever.

Embodiments of the invention will now be described, by way of example, with reference to the accompanying drawings, in which:

Figure 1 is a fragmentary perspective sectional view of a motor car fitted with an opening roof assembly of the kind to which the invention relates, showing the panel in its closed position and each of two alternative open positions;

Figure 2 is a longitudinal sectional view of the rear part of an opening roof assembly of the kind shown in Figure 1;

Figure 3 is an exploded view of one construction of the rear shoe and the parts connecting the rear shoe to the panel of the roof assembly shown in Figures 1 and 2;

Figure 4 is a cross-sectional view of the parts shown in Figure 3 with the panel in the closed position, as shown in Figure 2;

Figure 5 is a cross-sectional view, similar to Figure 4 but with the parts in the positions which they occupy when the rear edge of the panel is raised;

Figure 6 is a cross-sectional view, similar to Figure 4 but with the parts in the positions which they occupy when the rear edge of the panel is lowered preparatory to sliding it under the vehicle roof;

Figure 7 is an exploded view, similar to Figure 3, of an alternative construction of the rear shoe and the parts connecting the rear shoe to the panel of the sliding roof assembly shown in Figures 1 and 2;

Figure 8 is a cross-sectional view of the parts shown in Figure 7 with the panel in the closed position, as shown in Figure 2;

Figure 9 is a cross-sectional view, similar to Figure 8 but with the parts in the positions which they occupy when the rear edge of the panel is partly raised shown in solid lines, and in the positions which they occupy when the panel is fully raised shown in chain-dotted lines;

Figure 10 is a cross-sectional view, similar to Figure 8 but with the parts in the positions which they occupy when the rear edge of the panel is lowered preparatory to sliding it under the vehicle roof;

Figure 11 is an exploded view of a front shoe in accordance with the invention with the panel in the closed position;

Figure 12 is a cross-sectional view of the parts shown in Figure 11 with the panel in the closed position, as shown in Figure 2; and

Figure 13 is a cross-sectional view, similar to Figure 12 but with the parts in the positions which they occupy when the rear edge of the panel is lowered preparatory to sliding it under the vehicle roof.

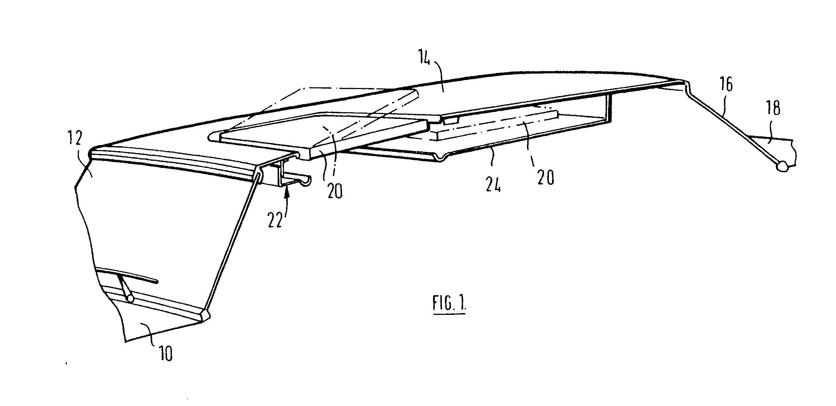

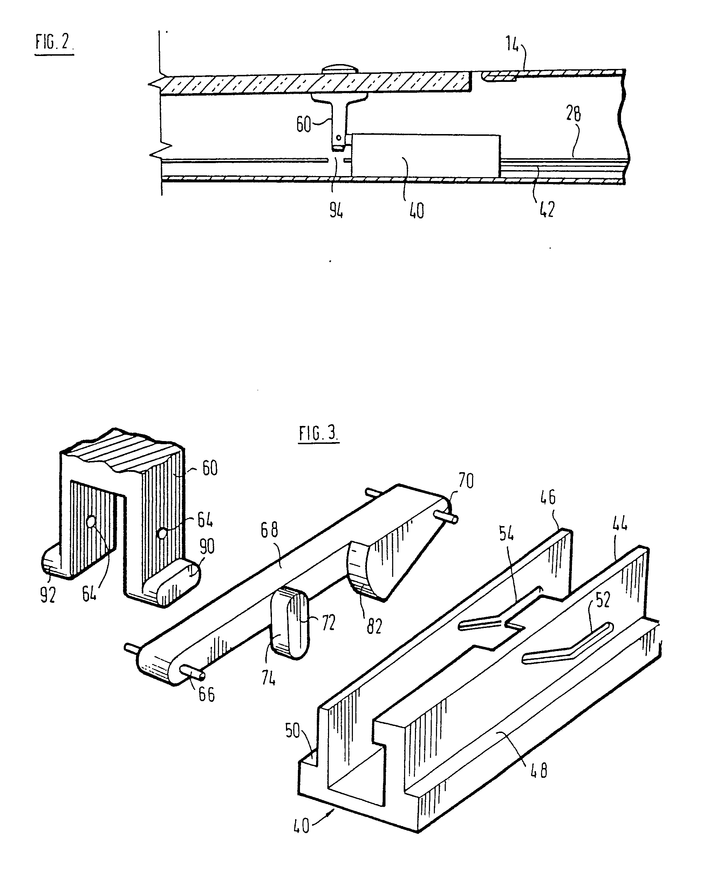

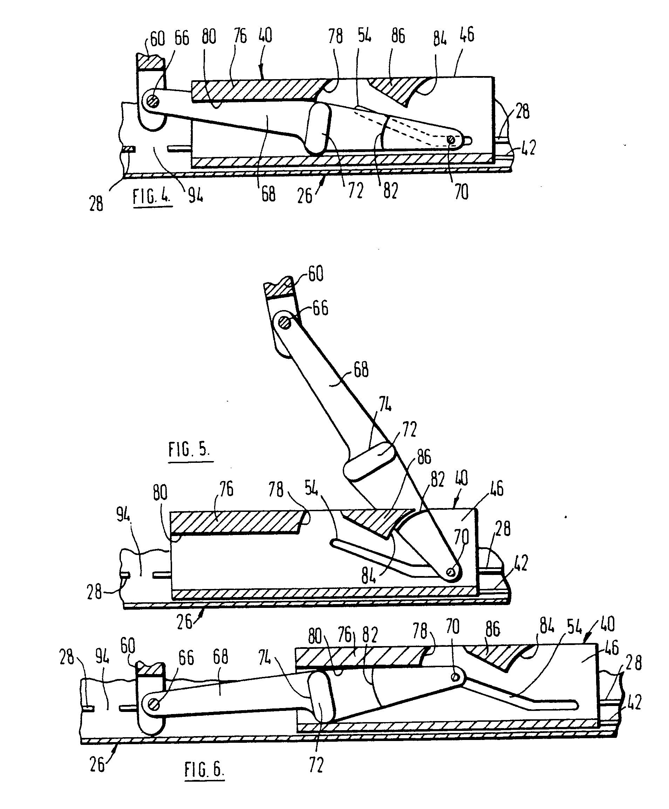

Figure 1 shows the upper part of the body of a saloon motor car comprising a bonnet 10, a windscreen 12, a roof 14, a rear window 16 and a boot 18. A movable glass roof panel 20 is located in a frame 22 bounding an opening in the vehicle roof and including a drain tray 24 forming the bottom of a chamber into which the roof panel 20 can be slid below the vehicle roof 14.

A respective guide track, on which the panel 20 is slidable, extends along each side of the opening in the vehicle roof 14 and into the space above the drain tray 24. Figure 2 shows the track 26 on the car driver's right-hand side of the opening in the vehicle roof 14, in longitudinal cross-section. The track consists of a generally U-shaped channel, the side walls of which have respective inwardly directed flanges 28 extending along substantially the whole length thereof.

At the rear edge of the panel 20, a rear guide shoe 40 is located in the guide rail 26 and connected by a flexible plastic tape 42 to drive means (not shown). As can be seen from Figures 3 and 4, the rear shoe 40 is of U-shaped cross-section, having side walls 44 and 46 which extend upwardly between the flanges 28 of the track, and shoulders 48 and 50 which engage thereunder. Each of the side walls 44 and 46 contains a respective slot 52 and 54, the two slots being aligned with one another and each having horizontal rear sections and upwardly inclined front sections.

Referring again to Figure 2, a respective bracket 60 is secured to the underside of the panel 20, near the rear edge thereof and above each of the tracks 26. As can best be seen from Figure 3, the bottom end of the bracket 60 is bifurcated and each of its limbs has a respective hole 64 for receiving the ends of a pin 66 which extends through one end of a lever 68. A second pin 70 extends through the other end of the lever 68 and is received in the slots 52 and 54.

Approximately midway between the pins 56 and 70, the lever 68 has a projection 72 facing the side limb 44 of the rear shoe 40. The projection 72 has an arcuate surface 74 centred on the pin 70. The limb 44 of the shoe 40 has a first cam formation 76, the rear surface 78 of which is a concave arcuate surface of slightly larger radius than that of the surface 74 and centred on the pin 70 when the latter is in abutment with the rear ends of the slots 52 and 54. The cam formation 76 also has a bottom surface 80 which is spaced from the bottom of the channel formed between the two limbs 44 and 46 by a distance slightly greater than the height of the projection 72. The projection 72 has rounded top and bottom surfaces so as to permit limited angular movement of the lever 68 about the projection 72, with the latter in the space between the surface 80 and the bottom of the channel, as will be explained hereinafter.

When the lever 68 is in the position illustrated in Figure 4, with the pin 70 displaced from the rear end of the slots 52 and 54, it can freely slide forwardly and rearwardly relative to the shoe 40 but cannot pivot about the pin 70 in either direction. If the pin 70 is slid into abutment with the rear ends of the slots 52 and 54, as illustrated in Figure 5, the projection 72 clears the rear end of the cam formation 40, allowing the lever 68 to pivot upwardly about the pin 70, engagement of the arcuate surface 74 of the projection 72 with the arcuate surface 78 of the cam formation 76 preventing forward movement of the pin 70 along the slots 52 and 54 while the lever 68 is raised. Before the bottom edge of the arcuate surface 74 has cleared the top edge of the arcuate surface 78, a second arcuate surface 82, formed on a thickened portion of the lever 68 adjacent to the pivot pin 70, engages with a complementary arcuate surface 84 on a second camming formation 86 on the side limb 44, as can be seen in Figure 5.

Referring now to Figure 6, if, with the lever 68 initially in the position shown in Figure 4, the pin 70 slides along the slots 52 and 54 to the front ends thereof, the lever 68 pivots about the bottom edge of the projection 72 as the pin 70 moves further up the inclined parts of the slots 52 and 54. This brings the bottom of the bracket 60 below the level of the flange 28. The bifurcated limbs of the brackets 60 have outwardly extending projections 90 and 92, the extremities of which are more widely spaced than the gap between the flanges 28. However, the flanges 28 have respective gaps 94 aligned with the brackets 60 when the panel 20 is aligned with the opening in the vehicle roof. These gaps 94 permit the projections 90 and 92 to pass the flanges 28.

The operation of the roof illustrated in Figures 1 to 6 is as follows. When the panel 20 is in its closed position illustrated in Figure 2, the lever 68 is in the position illustrated in Figure 4 with the pin 70 at an intermediate position along the length of the horizontal parts of the slots 52 and 54. When the roof is to be opened by raising its rear edge, the rear shoe 40 is moved forwardly by means of the tape 42, displacing the pin 70 to the rear ends of the slots 52 and 54. Forward movement of the panel 20 is resisted by the engagement of the finger 38 in the recess 39 at the front of the track 26 but, since the pin 66 is above the pin 70, the result of continued forward movement of the shoe 40 is to displace the pin 66 upwardly, this movement being possible because the front surface of the projection 72 on the lever 68 is now clear of the rear surface 78 of the camming formation 76. Forward movement continues until the lever 68 has rotated to the angle illustrated in Figure 5 which is the fully raised position. The roof can be closed again by moving the rear shoe 40 backwardly to the position illustrated in Figure 4.

On the other hand, when the panel 20 is to be slid below the vehicle roof 14, the rear shoe 40 is moved rearwardly from the position illustrated in Figure 4. As soon as the pin 70 reaches the front end of the horizontal parts of the slots 52 and 54, the lever 68 starts to pivot downwardly towards the orientation illustrated in Figure 6. Because the bracket 60 is aligned with the gap 94 in the flanges 28, this downward movement is not obstructed. Further rearward movement of the shoes 40 moves the bracket 60 rearwardly out of alignment with this gap 94, the finger 38 disengaging from the recess 39 at the front of the panel 20 which is opened to the extent desired. It should be appreciated that, as can be seen from Figure 2, the distance between the bottom of the track 26 and the vehicle roof 14 is greater at the rear of the opening than at the front. Consequently, no special action is necessary to lower the front of the panel 20 before it slides under the vehicle roof 14.

When the panel is to be moved back to its closed position, the rear shoes 40 are slid forwardly again, engagement of the projections 90 and 92 under the flanges 28 preventing upward movement of the panel 20 until it is aligned with the opening in the vehicle roof. When the finger 38 is again received in the recess 39, further forward movement of the rear shoes 40 causes the pin 70 to travel backwardly along the slots 52 and 54, raising the rear edge of the panel 20 until it is level with the vehicle roof 14.

The horizontal sections of the slots 52 and 54 provide a range of positions for the rear shoes 40 in which the panel 20 remains in its closed position level with the vehicle roof 14. The lengths of these horizontal sections is chosen in accordance with the accuracy with which the operating mechanism can stop the rear shoes 40 in a selected position.

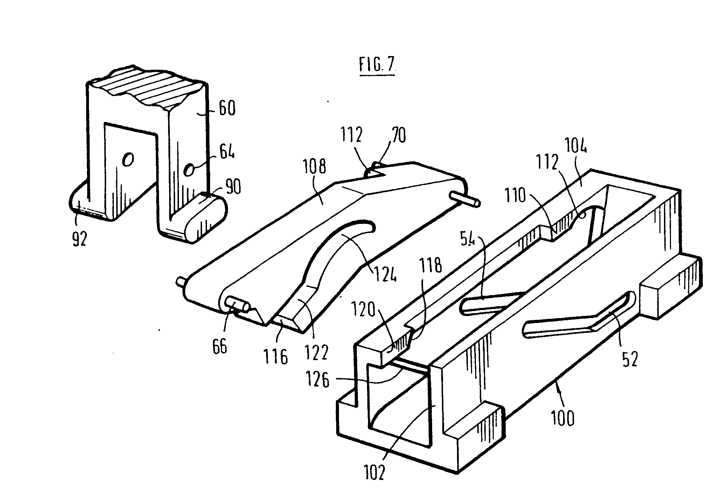

Turning now to Figures 7 to 10, the bracket 60 and the track 26 are similar to that already described and will not be described again in detail. However, the rear guide shoe 40 is replaced by a rear guide shoe 100 having side walls 102 and 104 containing slots 52 and 54 similar to the side walls 44 and 46 of Figure 3. The lever 68 is replaced by a lever 108, the rear end of which carries a pin 70 which engages in the slots 52 and 54, as before. The side wall 104 also has an inwardly extending projection 110 having a concave arcuate surface 112 which cooperates with a convex arcuate surface 114 on the lever 108 in a similar manner to the surfaces 82 and 84 of Figures 3 to 6 although the precise location of the surface 112 is somewhat different. Similarly, at its front end, the lever 108 has an arcuate surface 116 which cooperates with a corresponding concave arcuate surface 118 on a projection 120 at the front end of the side wall 104 in a similar manner to the arcuate surfaces 74 and 78 of Figures 3 to 6.

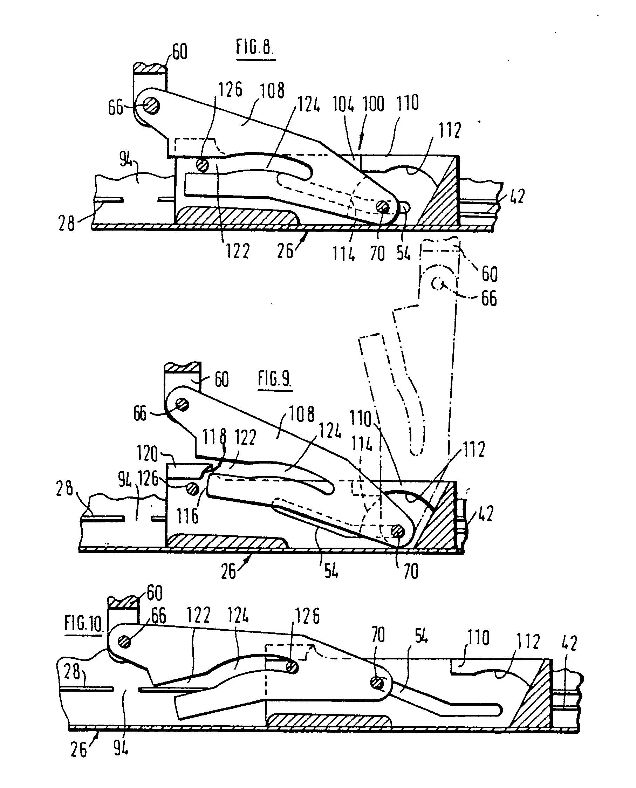

However, in place of the rounded bottom surface of the projection 72, the lever 108 has an open-ended slot with a straight front open end 122 and an arcuate rear or inner end 124. A pin 126 extends between the side walls 102 and 104 and can be engaged by the open-ended slot comprising the sections 122 and 124 as can best be seen in Figures 8 and 10.

Referring now specifically to Figure 7, when the panel 20 is in its normally closed position level with the vehicle roof 14, the pin 126 is received in the straight section 122 of the slot in the lever 108 while the pin 70 is in the horizontal rearmost sections of the slots 52 and 54. At this stage, the section 122 of the slot in the lever 108 is also horizontal, with the result that small horizontal movements of the shoe 100 relative to the lever 108 have no effect on the vertical position of the rear edge of the panel 20. In other words, the precise position of the shoe 110 along the track 26 is not critical.

If the shoe 100 is moved forwardly along the track 26 to bring the pin 70 into engagement with the rear end of the slots 52 and 54, the pin 126 disengages from the front end of the slot section 122. Further forward movement of the shoe 100 causes the lever 108 to pivot about the pin 70, raising the rear edge of the panel 20, as illustrated in Figure 9. The arcuate surfaces 116 and 118 prevent movement of the pin 70 forwardly along the slots 52 and 54 while the panel is raised to the extent illustrated in solid lines in Figure 9, while the arcuate surfaces 112 and 114 prevent such movement when the panel is raised to a greater extent, as illustrated in chain-dotted lines in Figure 9.

When the panel 20 is to slide under the vehicle roof 14, the shoe 100 is moved rearwardly, sliding the pin 70 to the front end of the slots 52 and 54 and the pin 126 to the inner end of the arcuate section 124 of the slot in the lever 108, thus lowering the rear edge of the panel, as illustrated in Figure 10. The panel 20 is now clear to slide rearwardly.

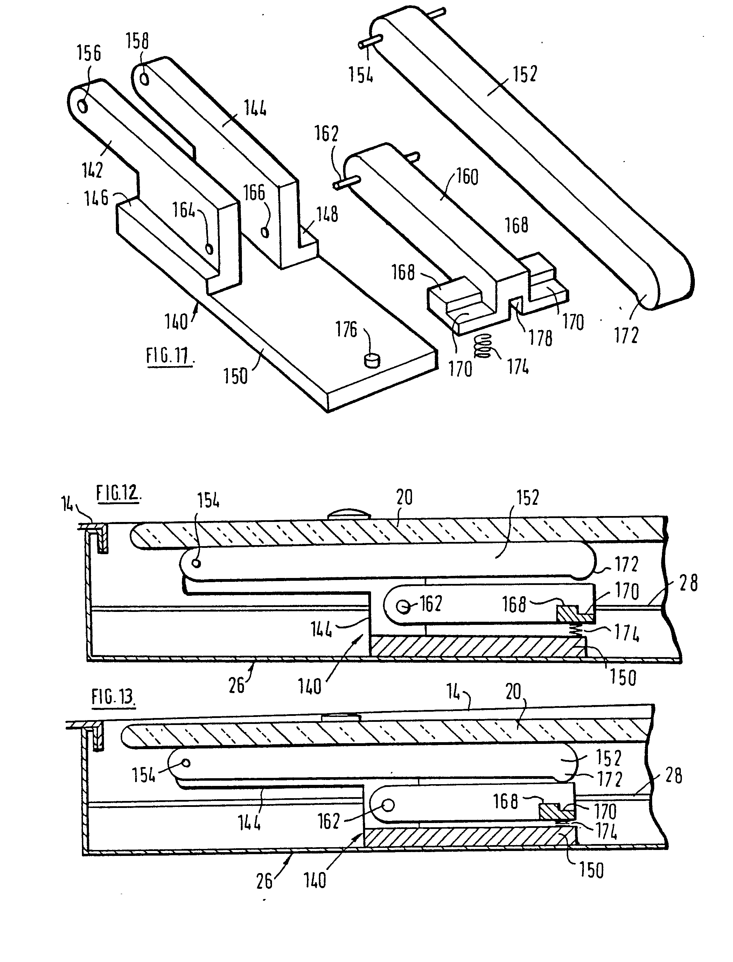

Figures 11 to 13 illustrate a front support means in accordance with the invention, which can be used either with rear support means as illustrated in Figures 3 to 6 or as illustrated in Figures 7 to 10. Referring particularly to Figure 11 and 12, a respective front shoe 140 for each side of the panel has side walls 142 and 144 which extend upwardly between the flanges 28 of the track and shoulders 146 and 148 which engage thereunder. The side walls 142 and 144 project beyond the base 150 of the front shoe 140 in the forward direction while the base 150 projects beyond the side walls 142 and 144 in the rearward direction. The thickness of the base 150 is approximately half the height of the shoulders 146 and 148.

A support member 152, to which the panel 20 is secured has a pivot pin 154 near its front end which is journalled in holes 156 and 158 in the front ends of the side walls 142 and 144 respectively. A latch member 160 is located between the rear half of the support member 152 and the base portion 150. At its front end, the latch member 160 has a pivot pin 162 which is journalled in holes 164 and 166 in the rear ends of the side walls 142 and 144 respectively. At its rear end, the latch member has a respective latching projection on each side, each projection having a front portion 168, of thickness slightly less than the difference between the height of the shoulders 146 and 148 and the thickness of the base portion 150 of the front shoe 140, and a back portion 170 of approximately half the thickness of the front portion 168. The support member 152 has a downwardly projecting nose 172 on its rear end which can engage with the upper surface of the latch member 160. A compression spring 174 is located on a peg 176 on the base member 150 and accommodated in a recess 178 in the latch member 160 so as to bias the rear end of the latter in the upward direction.

When the panel 20 is in its closed position level with the vehicle roof 14 as illustrated in Figure 12, the nose 172 on the support member 152 is out of engagement with the top of the latch member 160, the rear end of which is therefore urged upwardly by the spring 174. The thicker parts 168 of each of the latching projections engage in gaps (not shown) in the flanges 28 similar to the gaps 94 at the rear end of the roof opening (see Figures 2 and 4), thus preventing rearward movement of the front shoes 140. The thinner parts 170 of the latching projections engage under the flanges 28 behind these gaps, thus limiting upward movement of the rear end of the latch member 160. When the rear edge of the panel is to be raised, as shown in Figures 5 and 9 for example, the support member 152 pivots on its pivot pin 154 in an anticlockwise direction and the latch member 160 remains in the position illustrated in Figure 12, with the thicker portions 168 of the latching projections remaining in engagement with the slots in the flanges 28.

When the rear edge of the panel 20 is lowered, prior to sliding it under the vehicle roof 14, i.e. when the rear support means is in the position illustrated in Figures 6 and 10, the support member 152 pivots in the clockwise direction to the position illustrated in Figure 13 in which the nose 172 presses downwardly on the top of the latch member 160 so as to compress the spring 174 and disengage the thicker portions 168 of the latching projections from the slots in the flanges 28. The front shoes 140 are then free to slide along the track 26.

**Claims**

1. An opening roof assembly for a motor vehicle comprising a rigid panel (20) closing an opening in the vehicle roof (14) and having front support means (34) and rear support means (60) permitting the panel (20) either to pivot upwardly about a transverse horizontal axis adjacent to its front edge so that the rear edge of the panel (20) is above the vehicle roof (14) or to slide rearwardly below the vehicle roof (14), the front support means comprising a guide shoe (140) pivotally connected to the panel and slidably mounted in a track (26) extending parallel to a side edge of the opening, characterised in that the front support means further comprises a latch member (160) pivotally mounted on the front shoe (140) and having a latching formation (168) which engages with a complementary formation on the track (26) to prevent movement of the front shoe (140) along the track (26) and resilient means (174) for biasing the latching formation (168) into engagement with the complementary formation, release means (172) fast with the panel (20) being arranged to move the latching formation (168) out of engagement with the complementary formation as the rear edge of the panel (20) is lowered below the vehicle roof (14).

2. An opening roof assembly for a motor vehicle according to claim 1, wherein the rear support means comprises a guide shoe (40, 100) arranged to be driven along the track (26) and a lever (68, 108) pivotally connected at its front end to the panel (20), the lever (68, 108) having a pivot formation at its rear end which pivotally engages in a slot (52, 54) in a side wall of the corresponding guide shoe (40, 100) and a stop formation which engages with a complementary formation on the shoe to limit downward angular movement of the front end of the lever (68, 108) about its rear end so that the panel (20) is supported level with the vehicle roof (14) when the pivot formation is at the rear end of the slot (52, 54).

3. An opening roof assembly according to claim 2, wherein the front end of the slot (52, 54) is higher than its rear end so that the rear edge of the panel (20) is below the level of the vehicle roof (14) when the pivot formation is at the front end of the slot (52, 54).

4. An opening roof assembly according to claim 3, wherein the slot (52, 54) has a rear end section which is parallel to the track (26) so that the panel (20) is level with the vehicle roof (14) when the pivot formation is at any position in this rear end section but is free to be lifted above the vehicle roof (14) only when the formation is at the rear end of the slot (52, 54).

5. An opening roof assembly according to claim 2, 3 or 4, wherein the lever (68, 108) is provided with cam follower means arranged to engage with camming means (78) on the rear shoe so as to hold the stop formation in engagement with the complementary formation except when the pivot formation is at the rear end of the slot (52, 54).

6. An opening roof assembly according to claim 5, wherein additional camming means (86) is arranged to cooperate with additional cam follower means (82) so as to prevent forward movement of the pivot formation along the slot (52, 54) when the rear edge of the panel (20) is raised.

7. An opening roof assembly according to claim 6, wherein the additional cam follower means (82) comprises a first cam follower located at the same distance from the pivot means as the stop formation (72) and a second cam follower between the pivot means and the first cam follower.

8. An opening roof assembly according to claim 7, wherein the additional camming means comprises a first cam surface arranged to be engaged by the first cam follower when the extent to which the rear edge of the panel (20) has been raised is less than a predetermined value, and a second cam surface arranged to engage with the second cam follower when this limit is exceeded.

9. An opening roof assembly according to any of claims 2 to 8, wherein the stop formation for limiting angular movement of the front end of the lever (68) comprises a projection on one side of the lever (68), and the complementary formation on the shoe comprises a slot or groove in a side wall thereof.

10. An opening roof assembly according to any of claims 2 to 8, wherein the stop formation for limiting angular movement of the front end of the lever (108) comprises a slot in the lever (108) and the complementary formation comprises a pin secured to the shoe.

11. An opening roof assembly according to claim 10, wherein at least that part of the slot in which the pin is located when the rigid panel (20) is level with the vehicle roof (14) is parallel to the part of the slot in the guide shoe (40, 100) which is then occupied by the pivot formation at the rear end of the lever.

**Patentansprüche**

1. Schiebedach für ein Kraftfahrzeug, umfassend eine starre Platte (20), die eine Öffnung in dem Fahrzeugdach (14) verschließt und eine vordere Lagereinrichtung (34) sowie eine hintere Lagereinrichtung (60) aufweist, die es ermöglichen, daß die Platte (20) entweder um eine horizontale Querachse neben der Vorderkante nach oben verschwenkt wird, so daß die Hinterkante der Platte (20) sich oberhalb des Fahrzeugdachs (14) befindet, oder unterhalb des Fahrzeugdachs (14) nach hinten verschoben wird, wobei die vordere Lagereinrichtung einen Führungsschuh (140) aufweist, der schwenkbar mit der Platte verbunden und verschieblich in einer Spur (26) aufgenommen ist, die sich parallel zu einer Seitenkante der Öffnung erstreckt, dadurch gekennzeichnet, daß die vordere Lagereinrichtung außerdem einschwenkbar an dem vorderen Schuh (140) montiertes Verriegelungsglied (160) aufweist, das eine Verriegelungsausbildung (168) besitzt, die mit einer komplementären Ausbildung an der Spur (26) in Eingriff kommt, um eine Bewegung des vorderen Schuhs (140) entlang der Spur (26) zu verhindern, sowie elastische Mittel (174) besitzt zum Vorspannen der Verriegelungsausbildung (168) in Eingriff mit der komplementären Ausbildung, ferner Freigabemittel (172) aufweist, die an der Platte (20) befestigt und derart ausgebildet sind, daß die Verriegelungsausbildung (168) außer Eingriff mit der komplementären Ausbildung bewegt werden, wenn die Hinterkante der Platte (20) unter das Fahrzeugdach (14) abgesenkt wird.

2. Schiebedach nach Anspruch 1, dadurch gekennzeichnet, daß die hintere Lagereinrichtung aufweist: einen Führungsschuh (40, 100) der so angeordnet ist, daß er entlang der Spur (26) getrieben wird, und einen Hebel (68, 108), der an seinem vorderen Ende schwenkbar mit der Platte (20) verbunden ist, wobei der Hebel (68, 108) an seinem hinteren Ende eine Schwenkeinrichtung besitzt, die schwenkbar in einen Schlitz (52, 54) in einer Seitenwand des entsprechenden Führungsschuhs (40, 100) eingreift, und eine Anschlagausbildung besitzt, die mit einer komplementären Ausbildung an dem Schuh in Eingriff gelangt, um die Abwärts-Winkelbewegung des vorderen Endes des Hebels (68, 108) um dessen hinteres Ende zu begrenzen, so daß die Platte (20) in einer Höhe mit dem Fahrzeugdach (14) gelagert ist, wenn die Schwenkeinrichtung sich an dem hinteren Ende des Schlitzes (52, 54) befindet.

3. Schiebedach nach Anspruch 2, dadurch gekennzeichnet, daß das vordere Ende des Schlitzes (52, 54) höher liegt als dessen hinteres Ende, so daß die Hinterkante der Platte (20) sich unterhalb der Höhe des Fahrzeugdachs (14) befindet, wenn die Schwenkeinrichtung sich am vorderen Ende des Schlitzes (52, 54) befindet.

4. Schiebedach nach Anspruch 3, dadurch gekennzeichnet, daß der Schlitz (52, 54) einen hinteren Endabschnitt aufweist, der parallel zu der Spur (26) verläuft, so daß die platte (20) sich in einer Höhe mit dem Fahrzeugdach (14) befindet, wenn die Schwenkeinrichtung sich an irgendeiner Stelle in diesem hinteren Endabschnitt befindet, jedoch für ein Anheben über das Fahrzeugdach (14) nur dann frei ist, wenn die Einrichtung sich am hinteren Ende des Schlitzes (52, 54) befindet.

5. Schiebedach nach Anspruch 2, 3 oder 4, bei dem der Hebel (68, 108) mit einem Steuerkurvenfolgeglied ausgestattet ist, welches so angeordnet ist, daß es mit einer Steuerkurveneinrichtung (78) an dem hinteren Schuh in Eingriff kommt, um die Anschlag-Ausbildung in Eingriff zu halten mit der komplementären Ausbildung, ausgenommen dann, wenn die Schwenkeinrichtung sich am hinteren Ende des Schlitzes (52, 54) befindet.

6. Schiebedach nach Anspruch 5, bei dem eine zusätzliche Steuerkurveneinrichtung (86) derart vorgesehen ist, daß sie mit einer zusätzlichen Steuerkurvenfolgeeinrichtung (82) zusammenwirkt, um eine Vorwärtsbewegung der Schwenkeinrichtung entlang des Schlitzes (52, 54) zu verhindern, wenn die Hinterkante der Platte (20) angehoben ist.

7. Schiebedach nach Anspruch 6, bei dem die zusätzliche Steuerkurvenfolgeeinrichtung (82) ein erstes Steuerkurvenfolgeglied enthält, welches sich in dem gleichen Abstand von der Schwenkeinrichtung befindet wie die Anschlagausbildung (72), sowie ein zweites Steuerkurvenfolgeglied zwischen der Schwenkeinrichtung und dem ersten Steuerkurvenfolgeglied besitzt.

8. Schiebedach nach Anspruch 7, bei dem die zusätzliche Steuerkurveneinrichtung eine erste Steuerfläche besitzt, die so angeordnet ist, daß mit ihr das erste Steuerkurvenfolgeglied in Eingriff gelangt, wenn das Ausmaß, bis zu dem die Hinterkante der Platte (20) angehoben wurde, geringer ist als ein vorbestimmter Wert, sowie eine zweite Steuerfläche besitzt, die derart angeordnet ist, daß mit ihr das zweite Steuerkurvenfolgeglied in Eingriff gelangt, wenn diese Grenze überschritten wird.

9. Schiebedach nach einem der Ansprüche 2 bis 8, bei dem die Anschlagausbildung zum Begrenzen der Winkelbewegung des vorderen Endes des Hebels (68) einen Vorsprung an einer Seite des Hebels (68) aufweist, wobei die komplementäre Ausbildung an dem Schuh einen Schlitz oder eine Nut in dessen Seitenwand aufweist.

10. Schiebedach nach einem der Ansprüche 2 bis 8, bei dem die Anschlagausbildung zum Begrenzen der Winkelbewegung des vorderen Endes des Hebels (108) einen Schlitz in dem Hebel (108) aufweist, während die komplementäre Ausbildung einen an dem Schuh festgelegten Stift aufweist.

11. Schiebedach nach Anspruch 10, bei dem zumindest der Teil des Schlitzes, in welchem der Stift gelegen ist, wenn die starre Platte (20) auf gleicher Höhe mit dem Fahrzeugdach (14) ist, parallel ist zu dem Teil des Schlitzes in dem Führungsschuh (40, 100), der dann von der Schwenkeinrichtung am hinteren Ende des Hebels belegt ist.

**Revendications**

1. Un ensemble de toit ouvrant pour un véhicule automobile comprenant un panneau rigide (20) formant une ouverture ménagée dans le toit du véhicule (14) et ayant des moyens de support avant (34) et des moyens de support arrière (60) permettant au panneau (20) soit de pivoter vers le haut autour d'un axe horizontal transversal près de son bord avant de telle sorte que le bord arrière du panneau (20) soit au-dessus du toit du véhicule (14) soit de glisser vers l'arrière, en-dessous du toit du véhicule (14) les moyens de support avant comprenant un patin de guidage (140) relié afin de pivoter au panneau et monté coulissant dans une glissière (26) s'étendant parallèlement au bord latéral de l'ouverture, caractérisé en ce que les moyens de support avant comportent en outre un élément de verrouillage (160) monté pivotant sur le patin avant (140) et ayant une structure de verrouillage (168) qui vient en contact avec une structure complémentaire ménagée sur la glissière (26) pour empêcher le mouvement du patin avant (140) le long de la glissière (26) et des moyens élastiques (174) pour pousser la structure de verrouillage (168) à venir en contact avec la structure complémentaire, des moyens de dégagement (172) attachés au panneau (20) étant disposés pour dégager la structure de verrouillage (168) de la structure complémentaire lorsque le bord arrière du panneau (20) est abaissé en-dessous du toit du véhicule (14).

2. Un ensemble de toit ouvrant pour un véhicule automobile selon la revendication 1, dans lequel les moyens de support arrière comportent un patin de guidage (40, 100) destiné à être entraîné le long de la glissière (26) et un levier (68, 108) relié afin de pivoter à son extrémité avant au panneau (20), le levier (68, 108) ayant une structure à pivot à son extrémité arrière qui s'engage pour pivoter dans une fente (52, 54) dans une paroi latérale du patin de guidage correspondant (40, 100) et une structure de butée qui vient en contact avec une structure complémentaire ménagée sur le patin pour limiter le mouvement angulaire vers le bas de l'extrémité avant du levier (68, 108) autour de son extrémité arrière de telle sorte que le panneau (20) est supporté à niveau avec le toît du véhicule (14) lorsque la structure à pivot est à l'extrémité arrière de la fente (52, 54).

3. Un ensemble de toit ouvrant selon la revendication 2, dans lequel l'extrémité avant de la fente (52, 54) est plus élevée que son extrémité arrière de telle sorte que le bord arrière du panneau (20) est en dessous du niveau du toit du véhicule (14) lorsque la structure à pivot est à l'extrémité avant de la fente (52, 54).

4. Un ensemble de toit ouvrant selon la revendication 3, dans lequel la fente (52, 54) présente une section d'extrémité arrière qui est parallèle à la glissière (26) de telle sorte que le panneau (20) est à niveau avec le toit du véhicule (14) lorsque la structure à pivot est dans n'importe quelle position dans cette section d'extrémité arrière mais est libre d'être soulevée au-dessus du toit du véhicule (14) seulement lorsque la structure est à l'extrémité arrière de la fente (52, 54).

5. Un ensemble de toit ouvrant selon la revendication 2, 3 ou 4, dans lequel le levier (68, 108) est muni de moyens suiveurs de cames destinés à venir en contact avec des moyens de cames (78) sur le patin arrière de manière à maintenir la structure de butée en contact avec la structure complémentaire excepté lorsque la structure à pivot est à l'extrémité arrière de la fente (52, 54).

6. Un ensemble de toit ouvrant selon la revendication 5, dans lequel les moyens de cames additionnels (86) sont disposés pour coopérer avec les moyens suiveurs de cames additionnels (82) de manière à empêcher le mouvement vers l'avant de la structure à pivot le long de la fente (52, 54) lorsque le bord arrière du panneau est soulevé.

7. Un ensemble de toit ouvrant selon la revendication 6 dans lequel les moyens suiveurs de cames additionnels (82) comportent un premier suiveur de came logé à la même distance des moyens à pivot de la structure de butée (72) et un second suiveur à came entre les moyens à pivot et le premier suiveur à came.

8. Un ensemble de toit ouvrant selon la revendication 7 dans lequel les moyens de came additionnels comportent une première surface de came destinée à venir en contact avec le premier suiveur de came lorsque la distance dont le bord arrière du panneau (20) a été soulevée est inférieure à une valeur prédéterminée et une seconde surface de came destinée à venir en contact avec le second suiveur de came lorsque cette limite est dépassée.

9. Un ensemble de toit ouvrant selon l'une quelconque des revendications 2 à 8 dans lequel la structure de butée pour limiter le mouvement angulaire de l'extrémité avant du levier (68) comprend une saillie sur un côté du levier (68) et la structure complémentaire du patin comprend une fente ou rainure dans une paroi latérale de celui-ci.

10. Un ensemble de toit ouvrant selon l'une quelconque des revendications 2 à 8 dans lequel la structure de butée pour limiter le mouvement angulaire de l'extrémité avant du levier (108) comprend une fente dans le levier (108) et la structure complémentaire comprend un axe fixé au patin.

11. Un ensemble de toit ouvrant selon la revendication 10, dans lequel au moins la partie de la fente dans laquelle l'axe est logé lorsque le panneau rigide (20) est à niveau avec le toit du véhicule (14) et parallèle à la partie de la fente dans le patin de guidage (40, 100) qui est alors occupé par la structure à pivot, à l'extrémité arrière du levier.

FIG. 1.

EP 0 143 589 B1

FIG. 2.

14

60

28

94    40    42

FIG. 3.

60

64

90

92    64

70

68

46

54    44

66

72

82

52

74

50

48

40

FIG. 4.

FIG. 5.

FIG. 6.

FIG. 7

EP 0 143 589 B1

FIG.8.

FIG.9.

FIG.10.

FIG. 17.

FIG. 12.

FIG. 13.